# EUROPEAN PATENT APPLICATION

(11) **EP 1 555 670 A1**
(43) Date of publication of application: **20.07.2005**
(21) Application number: 04290100.9
(22) Date of filing: 14.01.2004
(51) Int. Cl.: G11B 19/12, G11B 20/00

(54) **Method of preventing unauthorized duplication of an optical disc by authentification of a physical parameter, manufacturing process of such an optical disc and an optical disc thus obtained**

(71) Applicant: SGN, 78100 Saint-Germain-en-Laye (FR)
(72) Inventor: Gouiffes-Natali, Marie-Stéphane, 78100 Saint Germain en Laye (FR)
(74) Representative: Schwartz, Thierry J.

(57) **Abstract**

The invention proposes to prevent unauthorised duplication of optical discs, in particular in compatibility with all existing readout hardware devices by creating, during the manufacturing process, at least one limited predefined portion (33) in the reflective layer (30) with an absence of reflectivity, and by granting access to digital content only when an identified absence of reflectivity is detected.

The reflective layer (30) is transformed before or just after being bonded to a standard dummy substrate, the portion(s) (33) extending over a plurality of tracks of the data layer in which data are stored.

As an example, a specific temporary cover (110) with missing physical portions (111) is set on with the reflective sputtered layer (30) and a chemical agent (35) is then released in the missing physical portions (111). The reflective layer is then locally removed to form openings locations (33) directly in regard to the corresponding area of the missing portions (111), and the temporary cover (110) is then set away.

Application to CD and DVD write once discs, rewritable discs, dual discs, one sided or dual sided optical discs

## Description

### BACKGROUND OF THE INVENTION

### Field of the invention

The present invention relates generally to the field of optical discs technology and more particularly to the prevention of unauthorized duplication of optical discs. It also provides a manufacturing process in line with the present low industrial cost of optical discs.

The invention also aims to keep granting end users all the advantages they are accustomed to with pre-recorded optical discs, write once or rewritable optical discs. Furthermore, the invention does not impact the standard mastering process of pre-recorded optical discs.

### Related prior art

The various optical disc formats have met over the last twenty years or more enormous success, especially the pre-recorded Compact Disc CD formats (CD-digital audio and CD-ROM) and Digital Versatile Disc (DVD) formats (DVD-ROM and DVD-video). Optical read only formats (ROM) have become the format of choice to provide the consumer with digital content, such as software applications, audio, video and multimedia content.

Thanks to their large data capacity, low cost, convenience and portability, billions of optical discs are marketed every year on multiple market segments. Various plans also exist to extend the capacity of the optical disc while keeping the original physical dimensions defined in 1980 (12 cm diameter; 1.2 mm width). The ongoing projects based on blue laser technology plan to extend the format success to new capacity levels, enabling new ways to use a simple, well-known and easy to use format.

Beside the pre-recorded ROM formats, write once (R) based on dye sublimation and rewritable (RW) based on change state materials have been developed to meet other business and consumer needs, for instance CD-R, CD-RW, DVD-R, DVD-RAM, DVD-RW, DVD+R and DVD+RW formats. Those formats have also met success through dissemination of specific R or RW discs and recording devices and steadily decreasing industrial costs. Volumes reached by those formats are today somewhat comparable and could, in the near future, be higher that those of ROM optical discs.

This technical context and the general digitalisation of copyrighted content have also enabled the development of mass piracy, both through the unauthorised replication of pre-recorded optical discs and the use of optical recording devices. The level reached by this piracy, supposed to be enormous in some geographical areas, is considered to plague certain copyright-based industries, especially given the relative ease with which unauthorized copies of optical discs can be generated.

Several legal and technical attempts have been made to fight and to curb this phenomenon. Various schemes have been designed to authenticate optical discs, that is to determine whether an undetermined optical disc is an authorized copy or not. Such disc authentication can occur in the form of forensic tracking or copy protection efforts.

Forensic tracking efforts generally require storing certain "marking" or "tracking" information on the disc. The forensic information usually does not prevent an unauthorized copy from functioning in a readout device, but based on the presence or absence of the information, a determination can be made whether a particular optical disc is in fact an authorized copy. Forensic information may include, for instance, information relating to the ownership of disc content, when and where the mastering process occurred, etc.

The general goal of copy protection is to render as difficult as possible the creation of a copy of an original optical disc without trail. Copy protection involves configuring the optical disc in such a manner that an authorized disc properly functions in a readout device, but an unauthorized copy does not.

Creating specific patterns such as unreadable sectors on authorized optical discs that are not readily able to be copied is a solution proposed by various prior art authentication schemes. A drawback of these schemes is that they can be easily defeated if a user of an ordinary consumer recording device coupled with the appropriate software can reproduce unreadable sectors in a copy and thereby create an unauthorized copy of a optical disc which will be incorrectly discerned by the authentication scheme to be an authorized optical disc.

Creating physical defects or a pattern of damage on the optical disc is another authentication approach. The damage can be performed by removing or damaging a ripcord incorporated in the optical disc as described in WO 98/41979 publication, or by selectively creating a pattern of damage with a laser device as recited in US 5,572, 582 or US 5,563,947. Publications following this approach also use known methods of degradation (scratching, eroding, coating, perforating, cutting, slicing, punching, burning, painting, etc.) impacting the optical disc reflectivity properties. In all those various solutions, a decryption key based on the physical damages is encoded to be detected by the reader in order to authenticate the disc.

Another authentication approach has been proposed by US 2003/0147339 publication. According to this scheme, copy-protection of optical discs is conducted by having information pits and lands of the optical disc in two different parallel planes instead of one according to standard specifications, by removing the reflective layer over information lands in a first of two planes and then by depositing a layer comprising optically changeable security material over the reflective layer so as to cover all information pits and information lands. Such an approach requires a very specific method of manufacturing requiring significant changes to the present industrial replication methods of optical discs.

All this prior art authentication methods show however that it remains a continued need to propose efficient schemes to prevent unauthorised duplication of optical discs. The present invention is directed to implement such a goal and overcome the aforementioned drawbacks, as well as to keep all the main advantages of the optical disc media: cheap, easy to use, and compatible with all existing readout hardware devices.

### SUMMARY OF THE INVENTION

To reach this object, the present invention is based on creating a specific reflective layer with special reflectivity properties during the manufacturing process of the optical disc.

More specifically, the subject-matter of the present invention relates to a method of preventing unauthorized duplication of an optical disc by physical and logical authentication, consisting of creating, during the manufacturing process, a specific reflective layer including at least one limited predefined portion with absence of reflectivity and of granting access to digital content included in the optical disc only when the identified physical absence of reflectivity linked to this specific reflective layer is detected.

The specific absence of reflectivity will render the disc physically and logically different from another optical disc, in particular a standard write once or rewritable optical disc fully respecting the standard specifications for those discs, and this difference is advantageously assessed to authenticate and validate an authorised optical disc by appropriate automated means and to deny access to digital content for optical discs that are not positively authenticated. The absence of reflectivity can also be assessed by manual means, in particular in a forensic context.

The method according to the invention is implemented without hindering the general operation of the optical disc. The proposed physical authentication process can be used for copy protection but also for forensic examination purposes, for instance when used with specific dyes. It can be implemented with any format, preferably pre-recorded formats, but also write once and rewritable formats.

According to the invention, this method allows the authentication of an undetermined optical disc as being an original authorized optical disc distinct form an unauthorized copy thereof. Unauthorized copies can still be operated but with specific or limited content.

The method comprises more particularly the steps of:
- authoring the optical disc content and generating the disc image in order to position the content that requires to be accessible in area not facing the disc area(s) with absent reflectivity;
- generating the disc master following optical disc replication industry general practices;
- creating the specific reflective layer so that the reflective layer includes at least one local and limited zone without any reflective material or with total absence of reflectivity; these specific zones span over multiple tracks of the optical disc in the dimension perpendicular to the tracks and between substantially 500 µm and 5 mm in the dimension parallel to the tracks; in any case, these specific zones are designed so that they are beyond the error corrections capabilities of standard hardware readout devices;
- authenticating the specific disc before granting access to digital content and denying further optical disc access if the disc is not authenticated through a encryption scheme.

According to another aspect, the invention also relates to a manufacturing process of an optical disc to implement said authentication method, in particular with sputtering at least one data layer with a reflective layer of a metallic material wherein at least one reflective limited portion of the reflective material of the reflective layer is transformed before being bonded to a standard dummy substrate, or just after bonding to a specific dummy substrate with missing portions facing the zones for which no reflectivity is expected, and the portion(s) extending over a plurality of tracks between lead in and lead out areas of the data storage layer.

Said transformation is caused:
- by specific sputtering enabling the generation of the specific reflective layer through the use of bonding cut-out masks covering some portions of the data layer and by removing those masks after the sputtering process or letting them in place when they are made up with radiation absorbing material;
- by removal through dissolution of a limited segment of a metallic reflective layer following a chemical or electrochemical reaction with the metal used as reflective material, respectively during sputtering or after sputtering;

According to particular embodiments:
- the non-reflective portion(s) of the reflective layer and the data layer(s) are indexed so that specific data are facing the missing portion(s) of the reflective layer;
- in the authoring step, various missing sectors are planned to be missing during the latter manufacturing process, of which only some will be at last non reflective zones;
- the missing portion(s) of the reflective layer results of a substantial oblong ablation of material throughout all the disc layers, these specific portions span over multiple tracks of the optical disc in the dimension perpendicular to the tracks and between substantially 500 µm and 5 mm in the dimension parallel to the tracks.

The process does not divert too much from the current replication industrial process and can be implemented at industrial cost comparable to standard optical discs.

The invention also relates to the optical disc thus obtained by implementing the manufacturing process and comprising, from the non-read to the read-side, a dummy substrate or a protective coating, a reflective layer formed by a metallic reflective material, and at least one data layer.

According to preferred embodiments concerning the authentication scheme for authorized discs, the preferred following approaches can be implemented:
- integrating a specific checking program in the disc, intended to check the access to the data normally present in the zone facing the missing portions and to deny further access to disc content if not detecting a non reflectivity zone on the disc;
- comparing data access time measures to a non reflective zone and to a reflective zone to detect access to low reflectivity zone, data access time meaning the time taken for the readout device to access a data track and begin transferring data;
- comparing the time required to move from a reflective zone to another one, both of them being close to a non reflective zone, and the time required for a comparable jump in a full reflective zone; as the readout device generally uses the coarse tracking count of tracks for local jumps to process those jumps, the two elapsed times are different and the first one much longer than the second;
- using servo mechanisms information or tracking information provided by servo-mechanisms integrated in the readout device to automate authentication of a disc for which some portions have no reflectivity, specific firmware being provided to enable the transmission of such data to an authentication program hosted in the disc itself;
- providing specific software to authoring of write once, rewritable or dual disc in order to use the required authentication process.

According to other particular embodiments, tests are executed prior to the reading out of any of the optical disc data to be protected. The following parameters are to be measured: the source bytes read, the data transfer rates, the level of optical errors detected. Those tests are part of an initialising routine that is recorded on the authorized disc.

The optical discs obtained by implementing the process according to the invention comprise write once discs, rewritable discs, dual discs, i.e. discs combining read only (pre-recorded) and write once/rewritable discs, one sided or dual sided optical discs.

### BRIEF DESCRIPTION OF THE DRAWINGS

The invention is now detailed in the hereafter description of examples of preferred embodiments of the invention, in reference with the enclosed drawings that represent, respectively:
- Figures 1 a to 1 c, schematic perspective and partial in cut views of the multilayered structure of a DVD-ROM disc according to the invention;
- Figures 2 and 2a, schematic perspective and partial in cut views of such a multilayered structure DVD disc during a chemical step of the manufacturing process according to the invention;
- Figures 3 and 3a, schematic perspective and partial in cut views of such a multilayered structure DVD disc during an electrochemical step of the manufacturing process according to the invention;
- Figures 4 and 4a, schematic perspective and partial in cut views of such a multilayered structure DVD disc during a masking sputtering step of the manufacturing process according to the invention; and
- Figure 5 and 5a, schematic perspective and partial in cut views of such a multi layered structure DVD disc during an alternative chemical or electrochemical step of the manufacturing process according to the invention.

### DETAILED DESCRIPTION OF PREFERRED EMBODIMENTS

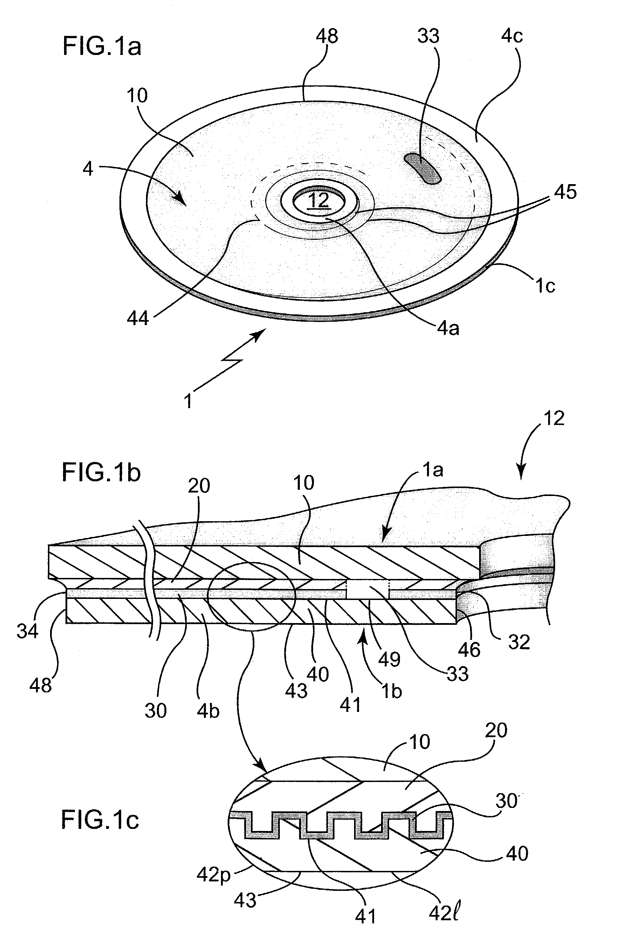

The structure of a DVD-ROM disc according to the invention 1 is illustrated in Figures 1a and 1b. This disc presents a central aperture 12 and a single data layer single-sided ROM arrangement, including from an upper presentation face 1a to a bottom reading face 1b:
- a dummy substrate 10 provided for the mechanical support of the disc, in the case of DVD discs (replaced by an upper protective coating in the case of CD discs),
- an adhesive layer 20 to overly a reflective layer 30 having a portion 33 without reflective material forming a non reflectivity zone, and
- a recorded data transparent layer 40 with an upper 41 and a bottom side 43.

A data storage portion 4 of the data layer 40 includes readable information formed within one single spiral 44 of circumferential tracks 45 to be scanned by a laser. The data storage portion 4 has a leading edge 46 that is radially outward of the aperture 12, and an outer edge 48 inward the edge 1 c of the disc 1. The physical disc layout also separates a lead-in zone 4a, a middle zone 4b (data area) and a lead out zone 4c.

Each data track 45 represents a 360 degrees turn of the spiral 44. Disc data is physically embossed in the form of pits 42p and lands 421 of the upper face 41, as shown in Figure 1c (an enlarged view of Figure 1b), which are the core of the signal processing implemented by the optical readout device.

As for the reflective layer 30, it provides a reflective surface for the output of a laser so that the data stored in the data portion 4 can be read. The reflective layer 30 has an inner edge 32 and outer edge 34 positioned radially facing respectively the leading edge 46 and the outer edge 48 of the data portion 4. The reflective layer 30 is made of aluminium in the present example.

The optical disc technology relies on the reflectivity of the disc, i.e. the double-pass optical transmission of light to and from the recording layer through the substrate. Single layer discs have the highest reflectivity, generally rated 100%, a better reflectivity than dual layer discs and write once discs, while rewritable discs have the lowest reflectivity, at a level still to be acceptable by readout devices. Write once and rewritable discs have a grooved tracking path where the recording process takes place and include specific layers, normally dye for write once discs and phase change materials for rewritable formats, for instance Ag-In-SB-Te alloys.

Steps to manufacture the standard single layer single side disc 1 are the following:
- first standard step: authoring the optical disc content and generating the mould including the data in the form of pits and lands following the standard mastering process well known in the art,
- second standard step: moulding data layer upper side 41,
- third standard step: moulding dummy substrate 10,
- fourth standard step: generating the reflective layer 30 over the data layer side 41, accomplished by a sputtering process where the data layer side is placed in a vacuum chamber with a metal target, aluminium in the present case, and electrons are shot at the target, bouncing individual metal molecules of the metal onto the data layer which attracts and holds them by static electricity,
- fifth standard step: bonding the data layer 41 with attached reflective layer to the dummy substrate 10 with ultraviolet cured or hot melt adhesive.

The manufacturing process of invention remains as close as possible to the standard replication industry manufacturing steps, and involves only additional specific operations in the optical disc content structure.

To implement the process according to the invention, a combination between a specific authoring and the creation of the specific reflective layer 30 during the manufacturing process is performed through specific authoring allowing an accurate physical location of data in the data layer 40.

The key logical disc data and the main disc content remain accessible and are located on locations of the data layer 40 facing reflective material of the reflective layer 30 between the edge 46 of the lead in area 4a and the edge 48 of the lead out area 4c. Thus, for specific data locations 45 facing substantially non reflectivity zones 33, data is not accessible anymore, whereas all useful content data located on zones facing the reflective layer 30 zone having full reflectivity properties.

Structuring disc data entails adaptation of authoring software in order to take into account the location accuracy of data and to enable the latter authentication process. Advantageously, a portion of the optical disc surface is filled with data in order to respect the generation of the continuous data path, in the form of the continuous spiral 44, and to ensure that useful content data are facing the reflective layer parts with full reflectivity properties.

The manufacturing process of the invention then enables to create the specific reflective layer.

The material used for the specific reflective layer is aluminium, as aluminium is the material of choice for the reflective layer in the optical disc replication industry.

Aluminium has relatively low reactivity in that, due to its characteristics, a cover of oxide instantly protects it at any time. However, aluminium reacts chemically under certain conditions when the aluminium oxide is dissolved by a chemical agent that can, because of the dissolution of the oxide, react with the aluminium. According to a first example, aluminium is etched with bases such as NaOH or KOH to perform a non reflectivity location 33. Aluminium is also sensitive to acids such as HCl, H₂SO₄, HNO₃, and several metallic salts, such as CuSO₄.

Other types of metallic material having properties similar to aluminium may also be used with the optical disc medium, for instance silver that reacts with various sulfur solutions. Therefore, the type of metallic material used for the reflective layer should be taken into account to determine the type, concentration, and amount of the chemical agent needed.

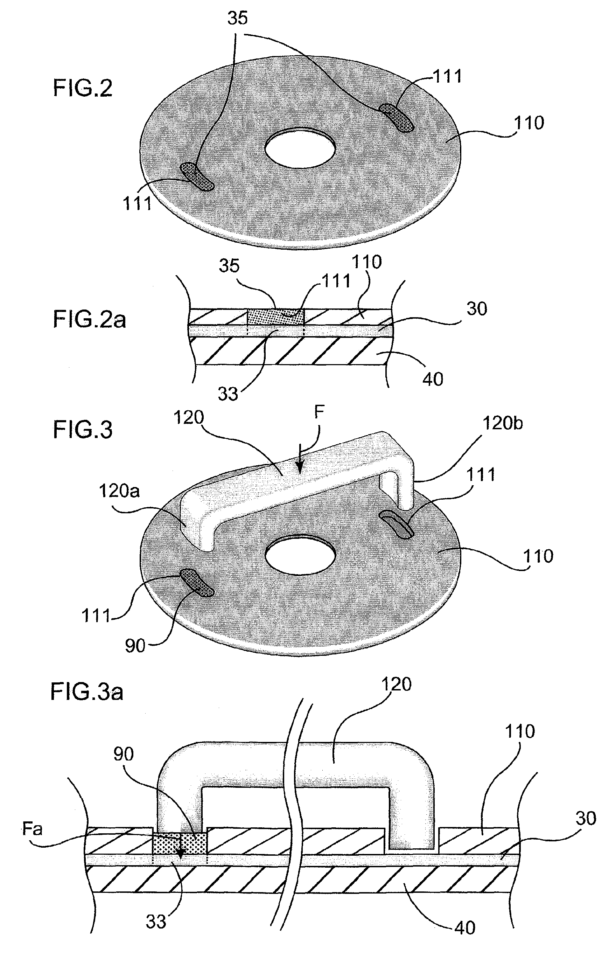

In order to generate the specific reflective layer in reference to Figures 2 and 2a, a specific temporary cover 110 with missing physical portions 111 is set in intimate contact with the aluminium sputtered layer 30, by any known clamping means (not represented) before the implementation of the last bonding manufacturing step. The cover 110 is made of resistant material to acid or basic solution such as titanium base alloys.

The chemical agent 35 is released in the missing physical portions 111. Following the chemical reaction with the chemical agent, aluminium is then locally removed thoroughly in depth to form openings locations 33 directly in regard to the corresponding area of the portions 111. The aluminium thus processed enables the creation of the specific reflective layer. The reaction is then stopped by neutralising the chemical agent and rinsing. Finally, the temporary cover 110 is set away.

In another embodiment illustrated in Figures 3 and 3a, an electrochemical reaction is facilitated by laying a sodium chloride solution 90 in a missing portion 111 of the cover 110 arranged on the aluminium layer 30 and by applying (arrow F) a copper rod 120 curved at its two ends. One end 120a of the rod is connected to the solution 90 and the other end 120b of the rod is contacted to the aluminium layer 30 through another missing portion 111 of the cover 110.

When contact is exerted between the rod end and the aluminium layer, the chemical solution dissolves the portion of aluminium 33 regarding the sodium chloride solution 90 (arrow Fₐ). This reaction is due to the difference of electrochemical potential between aluminium and copper. Because aluminium is less electronegative than copper, an electrolytic current flows through the circuit. Electrons begin to flow from the aluminium to the copper and, as a consequence, the aluminium breaks down because of voltaic action until aluminium has locally broken down to a sufficient degree to hinder reflectivity. The reaction is stopped by rinsing with a neutralizing liquid.

Alternatively, aluminium can be removed mechanically by etching with an electron or ionic beam, by eroding, perforating, cutting, slicing or punching.

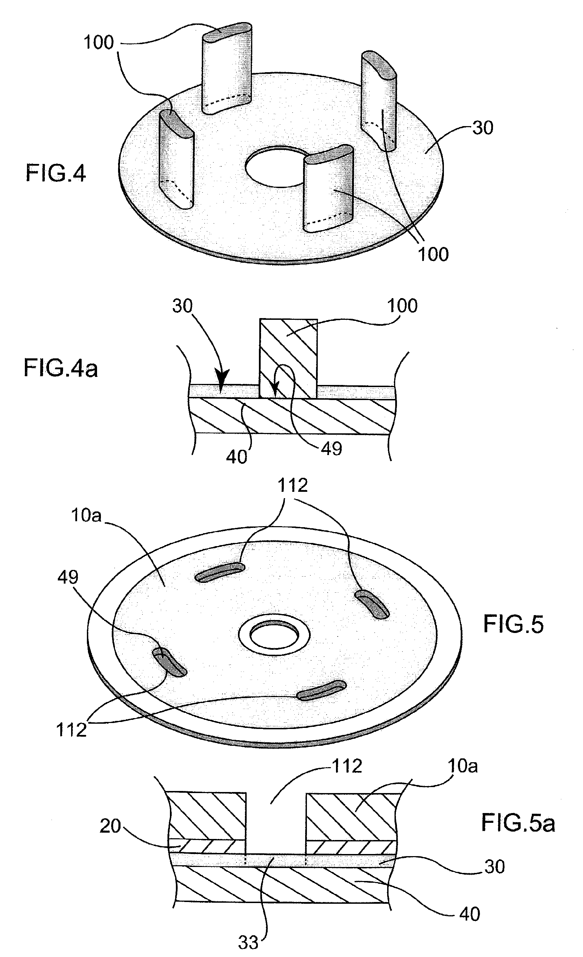

Alternatively to the removal of aluminium based on a chemical or electrochemical reaction, the required reflectivity absence can be performed by the presence of four masks 100, symmetrically arranged on the data layer 40 as shown in Figure 4. The masks are bonded to the data layer 30, for instance by removable bonding material. The masks 100 create a specific aluminium layer 30 after performing the sputtering step (Figure 4a), by preventing the corresponding portions 45 of the data layer 40 facing the masks 100 to be covered with aluminium during the sputtering step. After sputtering, the masks are removed. In another embodiment, the masks are constituted of radiation absorbing material, such as darkened composites. In this case, the masks having the same thickness of the remaining reflective layer are kept in place.

In all the previous embodiments enabling the generation of the specific reflective layer, the final manufacturing process includes the bonding of the data layer 40 to the dummy substrate 10 (or a protecting coating).

In another embodiment shown in Fig. 5, a specific dummy substrate 10a with missing portions 112 facing the zones 45 for which no reflectivity is expected is bonded to the data layer. The substrates then are bonded with hot melt adhesive 20a in order not to have bonding material facing the zones 33 of the reflective layer that are to be removed. Then any of the chemical or electrochemical described above solutions are applied to remove the reflective layer material on required zones. In this case, final manufacturing steps include filling the gap facing the missing reflective portions if any with a non reflective absorber and printing the disc on single side.

Advantageously, each individual non reflectivity zone 33 of the specific reflective layer 30 is also of limited size, spans over multiple tracks of the optical disc in the dimension perpendicular to the tracks, typically 100 tracks, and between substantially 500 µm and 5 mm in the dimension parallel to the tracks. Advantageously, the non reflectivity zone minimizes the number of tracks and sectors that will not be accessed any more while being of a size that is beyond the error correction capabilities of readout devices to manage optical disc manufacturing defects and provide some immunity to normal mishandling of optical discs such as fingerprints, dust, scratches, dirt or other limited damages.

Advantageous solutions, but not limiting the scope of the invention, have symmetric non destructive zones around the centre disc hole, for instance two or four zones as indicated in reference to Figures 2 to 5.

The final look and feel of the optical disc following the invention are very close to a standard optical disc, with the main visible difference linked to the specific reflective layer. It is possible to hinder this difference through use of dark material for the data layer, or to use specific material in particular for the forensic purposes of authentication process proposed.

The authentication methods rely on the fact that the specific reflective layer renders the behaviour of the optical disc according to the invention different from standard optical disc behaviour, whether this standard optical disc is a pre-recorded, write once or rewritable disc. In particular, the limited removal of reflective material locally disrupts, from an optical readout perspective, the disc single spiral that is present in all standard optical discs. Such major difference is used to authenticate the discs by visual or automated authentication methods.

A visual authentication process is made without a readout device and can in particular be used for forensic purposes. For this authentication purpose, the specific reflective layer and the local absence of reflectivity are linked to other disc features, such as disc data, serial numbers or any other serialization system, detectable presence of specific material, colours and printouts, etc.

Automated authentication through software uses automatic means to authenticate the disc, for instance an authentication program available of the optical disc itself. This authentication program can be the base of a strong encryption scheme providing shield to the digital content that requires protection.

A first embodiment comprises the steps of measuring the time required to move from a reflective zone to another one, both of them being very close to a non reflective zone, and comparing this measure to the time required for a comparable jump in a full reflective zone. Given the method used by the readout device to process those jumps often based on the count of tracks for local jumps, the two elapsed times are different and the first one is much longer than the second. This significant time difference is used to authenticate the authorized disc. By opposition, the same measure on an optical disc copy made from the optical disc object of the invention by standard recording means provides two comparable elapsed times, as the disc spiral is not disrupted from a readout perspective.

Another embodiment relies on the measure of access time, i.e. the time taken for the readout device to access a data track and begin transferring data in both reflective and non-reflective portions of the disc and compare them.

Still another embodiment measures the source bytes read, the data transfer rates, the level of optical errors detected. In any cases, these tests are part of an initialising routine that is recorded on the authorized disc and that is executed prior to any access to digital content to be protected.

All the previous embodiments can be combined in order to build the authentication scheme.

Alternatively, a control managed by the readout device can be performed. This embodiment is also based again on the existence of identifiable difference between the optical disc according to the invention and a standard optical disc. Most readout devices already manage reflectivity defects information, such as black dots or mirror effect, as well as they manage servo mechanisms information or tracking information.

The total absence of reflectivity then generates tracking loss since the non voluntary defects are bigger than certain dimensions, for instance 200 µm.

To this end, a specific firmware enabling the transmission of such data to an authentication program hosted in the optical disc itself is implemented. This type of firmware can be adapted by the skilled of the art since this information is available in existing readout devices but in the sole purpose of optimising the optical disc readout process.

The invention is not limited to pre-recorded optical discs, i.e. discs replicated after a specific mastering process, but is also adjustable for both write once and rewritable data:
- steps as the determination of the zone to be non reflective and the mains principles of authentication through software means are similar;
- specific authoring software is implemented in order both to sort the nature of content between zones with reflectivity and zones without reflectivity, but also to install on the disc itself the software tools to later authenticate the disc, since the write once and rewritable discs mostly use disc per disc authoring.

It is also possible to envision the use of dual optical discs, i.e. combination of pre-recorded and write once or rewritable zones on the same disc, the non reflective zone being included in the pre-recorded zone of the optical disc.

The efficiency of any of said authentication methods relies on the fact that the local reflectivity behaviour of the disc, the consequent local disruption of the tracking system from a readout perspective, or the generation of physical and very low level error codes by any readout device cannot be regenerated in local copies using write once or rewritable optical discs fully respecting the physical and logical specification of such various widespread formats. It also provides also various opportunities to fight the unauthorized replication of pre-recorded optical discs.

Another advantage of the solution is that, in any case, dramatically slows down the generation of optical copies of an authorized copy, for instance through "bit per bit" copy method. Furthermore, the invention also enables possible manual visual authentication of disc, useful in particular in a forensic context.

The invention is not limited to the embodiments described. Various combinations of software and hardware means can be implemented in the scope of the present invention.

## Claims

1. Method of preventing unauthorized duplication of an optical disc (1) by physical authentication, consisting of creating, during an industrial manufacturing process, a reflective layer (30) including at least one limited predefined portion (33) with an absence of reflectivity, and of granting access to digital content only when an identified absence of reflectivity is detected.

2. Preventing method according to claim 1, wherein the substantial absence of reflectivity in one or some selective portions (33) of the optical disc (1) makes the disc physically different to authenticate an authorized optical disc by visual or automated appropriate authenticating means and to deny access to content for optical discs that are not authenticated, for copy protection or forensic examination purposes with pre-recorded, write once and rewritable formats.

3. Preventing method according to the preceding claim, wherein the authentication of an undetermined optical disc as being an original optical disc distinct form an unauthorized copy thereof, the undetermined disc selected from the set of all copies of optical discs corresponding to original optical discs to be authenticated.

4. Preventing method according to the preceding claim, comprising the steps of:
- authoring the optical disc (1) in order to position data to be accessible in at least one precise physical location (4) of the disc;
- generating at least one local and limited optical disc portion (33) of the reflective layer (30) with intentional absence of reflectivity, the location of the at least one reflectivity lack portion not facing data to be accessible and being predetermined during the authoring process; and
- authenticating the specific disc before granting access to content and denying further content access if the disc is not authenticated.

5. Method of authenticating according to claim 4, wherein a specific checking program is coupled by integration in the disc, intended to check the access to the data normally present in the zone(s) (45) facing the missing portion(s) (33) and to deny further access to disc content if not detecting a non reflectivity zone on the disc, the absence of reflective material spanning radially over multiple tracks (45) of the optical disc in the dimension perpendicular to the tracks, and/or specifically between 500 µm to 5 mm in the dimension parallel to the tracks.

6. Method of authenticating according to claim 4, wherein a comparison of data access time measures to a non-reflective zone (33) and to a reflective zone is implemented.

7. Method of authenticating according to claim 4, wherein it is implemented a comparison of the time required to move from a reflective zone to another one, both of them being very close to a non-reflective zone (33), and the time required for a comparable jump in a full reflective zone.

8. Method of authenticating according to claim 4, wherein servo mechanisms information or tracking information provided by servo-mechanisms integrated in an optical readout device is used to automate authentication of a disc for which some portions have no reflectivity, specific firmware being provided to enable the transmission of such data to an authentication program hosted in the optical disc.

9. Method of authenticating according to anyone of the claim 5 to 8, wherein tests are executed prior to the reading out of any content be protected, by measuring from the optical disc the source bytes read, the data transfer rates or the level of optical errors detected, the tests being part of an initialising routine that is recorded on the authorized disc.

10. Manufacturing process of an optical disc to implement the preventing method according to any of preceding claims, in particular with sputtering at least one data layer (40) with a reflective layer (30) of a metallic material, data being stored in the data layer (40) as a series of pits (42p) arranged in circumferential tracks (45), wherein at least one reflective limited portion (33) of the reflective material of the reflective layer (30) is transformed before being bonded to a standard dummy substrate (10), or just after bonding to a specific dummy substrate (10a) with missing portions (112) facing the zones (49) for which no reflectivity is expected, and having the portion(s) (33) extending over a plurality of tracks (45) between lead in (4a) and lead out (4c) areas of the data storage layer (40).

11. Manufacturing process according to claim 10, wherein the transformation is performed by bonding cut-out mask(s) (100) corresponding to the respective portion(s) (45) onto the data layer (40) before sputtering it on the data layer (40) and, after sputtering, removing the mask(s) (100).

12. Manufacturing process according to claim 10, wherein the transformation is performed by bonding cut-out mask(s) (100) corresponding to the respective portion(s) (45) onto the data layer (40) before sputtering it on the data layer (40) and, after sputtering, letting it in place as it is made up with radiation absorbing material.

13. Manufacturing process according to claim 10, wherein the transformation is performed by removal through dissolution of a limited segment of a metallic reflective layer following a(n) (electro)chemical reaction with the metal used as reflective material after sputtering.

14. Manufacturing process according to the preceding claim comprising a chemical reaction, wherein a specific temporary cover (110) with missing physical portions (111) is set on with the reflective sputtered layer (30), a chemical agent (35) is then released in the missing physical portions (111) and the reflective is then locally removed to form openings locations (33) directly in regard to the corresponding area of the missing portions (111), and the temporary cover (110) is then set away.

15. Manufacturing process according to claim 13 comprising an electrochemical reaction, wherein a salt solution (90) is laid in a missing portion (111) of a temporary cover (110) arranged on the reflective layer (30) and by applying (F) a conductive rod (120), one end of which (120a) of the rod is connected to the solution (90) and the other end (120b) of the rod is contacted to the reflective layer (30) through another missing portion (111) of the cover (110) and wherein, when contact is exerted between the rod end and the reflective layer, the salt solution dissolves the portion of reflective material regarding the salt solution (90).

16. Manufacturing process according to any of the claims 10 to 15, wherein the reflective layer (30) and the data layer(s) (40) are indexed so that specific data are facing the missing or non-reflective portion(s) (33) of the reflective layer.

17. Manufacturing process according to the preceding claim, wherein in the authoring step, various missing sectors are initially integrated of which only some will be finally missing.

18. Manufacturing process according to any of the claims 10 to 17, wherein the missing portion(s) (33) of the reflective layer (33) results of a substantial oblong ablation of material throughout all the disc layers, over a main dimension of 500 µm to 5 mm in the direction parallel to the tracks, and performed mechanically at the end of the manufacturing process with local etching, eroding, perforating, cutting, slicing or punching.

19. Optical disc obtained by the implementation of the manufacturing process according to anyone of the claims 10 to 18, comprising a dummy substrate (10), a reflective layer (30) formed by a metallic reflective material, at least one data layer (40) obtained by implementing the manufacturing process and a disc program granting access to disc data only if the absence of reflective material has been tested and/or confirmed.

20. Optical disc according to the preceding claim, wherein the absence of reflective material spans over multiple tracks of the optical disc.

21. Optical disc according to claim 19 or 20, which is chosen between a write once disc, rewritable disc, dual discs, one sided or dual sided optical discs.

## Amended claims

### Amended claims in accordance with Rule 86(2) EPC.

**1.** Method of preventing unauthorized duplication of an optical disc (1) by creating physical defects of reflectivity, **characterized in that** it consists of creating, during an industrial manufacturing process of the disc, a reflective layer (30) with at least one limited predefined zone (33) with defect of reflectivity designed to be beyond error corrections capabilities of standard hardware readout devices, and of denying further access to digital content if not detecting an identified defect of reflectivity by a specific checking program coupled by integration in the disc and intended to check the access to the data normally present in the zone(s) (45) facing the defect reflectivity zone(s) (33).

**2.** Preventing method according to claim 1, wherein a comparison of data access time measures to a defect reflectivity zone (33) and to a normal reflective zone is implemented to detect the defect reflectivity zone.

**3.** Preventing method according to claim 1, wherein it is implemented a comparison of the time required to move from a reflective zone to another one, both of them being very close to a defect reflectivity zone (33), and the time required for a comparable jump in a full reflective zone.

**4.** Preventing method according to claim 1, wherein servo mechanisms information or tracking information provided by servo-mechanisms integrated in an optical readout device is used to automate authentication of a disc including at least one defect reflectivity zone (33), specific firmware being provided to enable the transmission of such data to an authentication program hosted in the optical disc.

**5.** Preventing method according to anyone of claim 1 to 4, wherein tests are executed prior to the reading out of any content be protected, by measuring from the optical disc the source bytes read, the data transfer rates or the level of optical errors detected, the tests being part of an initialising routine that is recorded on the authorized disc.

**6.** Preventing method according to claim 1, wherein the substantial defect of reflectivity in one or some selective portions (33) of the optical disc (1) makes the disc physically different and enables to authenticate an authorized optical disc by visual or automated appropriate authenticating means and to deny access to content for optical discs that are not authenticated, for copy protection or forensic examination purposes with pre-recorded, write once and rewritable formats.

**7.** Preventing method according to the preceding claim, wherein the authentication of an undetermined optical disc as being an original optical disc distinct form an unauthorized copy thereof, the undetermined disc selected from the set of all copies of optical discs corresponding to original optical discs to be authenticated.

**8.** Preventing method according to any preceding claim, comprising the steps of:
- authoring the optical disc (1) in order to position data to be accessible in at least one precise physical location (4) of the disc;
- generating at least one local and limited optical disc portion (33) of the reflective layer (30) with intentional defect of reflectivity, the location of the at least one reflectivity lack portion not facing data to be accessible and being predetermined during the authoring process; and
- authenticating the specific disc before granting access to content and denying further content access if the disc is not authenticated.

**9.** Method of authenticating according to any preceding claim, the defect of reflectivity zone (33) spanning radially over multiple tracks (45) of the optical disc in the dimension perpendicular to the tracks, and/or specifically between 500 µm to 5 mm in the dimension parallel to the tracks.

**10.** Manufacturing process of an optical disc to implement the preventing method according to any of preceding claims, in particular with sputtering at least one data layer (40) with a reflective layer (30) of a metallic material, data being stored in the data layer (40) as a series of pits (42p) arranged in circumferential tracks (45), wherein at least one reflective limited portion (33) of the reflective material of the reflective layer (30) is transformed before being bonded to a standard dummy substrate (10), or just after bonding to a specific dummy substrate (10a) with missing portions (112) facing the zones (49) for which no reflectivity is expected, and having the portion(s) (33) extending over a plurality of tracks (45) between lead in (4a) and lead out (4c) areas of the data storage layer (40).

**11.** Manufacturing process according to claim 10, wherein the transformation is performed by bonding cut-out mask(s) (100) corresponding to the respective portion(s) (45) onto the data layer (40) before sputtering it on the data layer (40) and, after sputtering, removing the mask(s) (100).

**12.** Manufacturing process according to claim 11, wherein the transformation is performed by bonding cut-out mask(s) (100) corresponding to the respective portion(s) (45) onto the data layer (40) before sputtering it on the data layer (40) and, after sputtering, letting it in place as it is made up with radiation absorbing material.

**13.** Manufacturing process according to claim 10, wherein the transformation is performed by removal through dissolution of a limited segment of a metallic reflective layer following a(n) (electro)chemical reaction with the metal used as reflective material after sputtering.

**14.** Manufacturing process according to the preceding claim comprising a chemical reaction, wherein a specific temporary cover (110) with missing physical portions (111) is set on with the reflective sputtered layer (30), a chemical agent (35) is then released in the missing physical portions (111) and the reflective is then locally removed to form openings locations (33) directly in regard to the corresponding area of the missing portions (111), and the temporary cover (110) is then set away.

**15.** Manufacturing process according to claim 13 comprising an electrochemical reaction, wherein a salt solution (90) is laid in a missing portion (111) of a temporary cover (110) arranged on the reflective layer (30) and by applying (F) a conductive rod (120), one end of which (120a) of the rod is connected to the solution (90) and the other end (120b) of the rod is contacted to the reflective layer (30) through another missing portion (111) of the cover (110) and wherein, when contact is exerted between the rod end and the reflective layer, the salt solution dissolves the portion of reflective material regarding the salt solution (90).

**16.** Manufacturing process according to any of the claims 10 to 15, wherein the reflective layer (30) and the data layer(s) (40) are indexed so that specific data are facing the missing or defect-reflective portion(s) (33) of the reflective layer.

**17.** Manufacturing process according to the preceding claim, wherein in the authoring step, various missing sectors are initially integrated of which only some will be finally missing.

**18.** Manufacturing process according to any of the claims 10 to 17, wherein the missing portion(s) (33) of the reflective layer (33) results of a substantial oblong ablation of material throughout all the disc layers, over a main dimension of 500 µm to 5 mm in the direction parallel to the tracks, and performed mechanically at the end of the manufacturing process with local etching, eroding, perforating, cutting, slicing or punching.

**19.** Optical disc obtained by the implementation of the manufacturing process according to anyone of the claims 10 to 18, comprising a dummy substrate (10), a reflective layer (30) formed by a metallic reflective material, at least one data layer (40) obtained by implementing the manufacturing process and a disc program granting access to disc data only if the defect of reflective material has been tested and/or confirmed.

**20.** Optical disc according to the preceding claim, wherein the defect of reflective material spans over multiple tracks of the optical disc.

**21.** Optical disc according to claim 19 or 20, which is chosen between a write once disc, rewritable disc, dual discs, one sided or dual sided optical discs.
